Europäisches Patentamt

European Patent Office

Office européen des brevets

(11) Veröffentlichungsnummer: **0 265 750 B1**

## (12) EUROPÄISCHE PATENTSCHRIFT

(45) Veröffentlichungstag der Patentschrift: **12.02.92**

(21) Anmeldenummer: **87114837.5**

(22) Anmeldetag: **10.10.87**

(51) Int. Cl.⁵: **B29C 45/67**

(54) **Formschliessvorrichtung für eine Spritzgiessmaschine.**

(30) Priorität: **31.10.86 DE 3637175**

(43) Veröffentlichungstag der Anmeldung:
**04.05.88 Patentblatt 88/18**

(45) Bekanntmachung des Hinweises auf die
Patenterteilung:
**12.02.92 Patentblatt 92/07**

(84) Benannte Vertragsstaaten:
**AT BE CH ES FR GB IT LI NL SE**

(56) Entgegenhaltungen:
**DE-B- 1 729 143**
**US-A- 2 396 539**
**US-A- 3 590 440**
**US-A- 4 017 236**

(73) Patentinhaber: **Krauss-Maffei Aktiengesellschaft**
**Krauss-Maffei-Strasse 2**
**W-8000 München 50(DE)**

(72) Erfinder: **Wohlrab, Walter**
**Birkenweg 9**
**W-8832 Weissenburg(DE)**

# Beschreibung

Die Erfindung bezieht sich auf eine Formschließvorrichtung für eine Spritzgießmaschine gemäß Oberbegriff des Anspruchs 1.

Spritzgießmaschinen dieser Art haben den Nachteil, daß sie sehr große und dementsprechend aufwendig zu bearbeitende Bauteile aufweisen, die darüberhinaus schwer abzudichten sind. Ein derartiges Bauteil ist beispielsweise aus dem Prospekt "Krauss-Maffei-Journal" Kunststoffmaschinen Nr. 8/1979 zu entnehmen, in dem auf Seite 14 in Bild 2 ein Schließkolben dargestellt ist, der eine dem auszuübenden Schießdruck entsprechende Kolbenfläche aufweist. Dabei ergeben sich insbesondere bei Großmaschinen mit über 8000 KN Schließkraft sehr große Durchmesser für die Schließkolben.

Der Erfindung liegt daher die Aufgabe zugrunde, eine Formschließvorrichtung zu schaffen, die einfacher zu bearbeitende und besser abzudichtende Bauteile aufweist.

Diese Aufgabe wird durch die kennzeichnenden Merkmale des Anspruchs 1 gelöst. Aufgrund des doppelt wirkenden Plunger-Differentialkolbens reicht zur Erzeugung der erforderlichen Schließkraft ein geringer Kolbendurchmesser aus, so daß die Laufflächen des Plunger-Differentialkolbens mit höherer Präzision und verbesserter Oberflächenqualität hergestellt werden können. Diese Eigenschaften bewirken einen geringeren Verschleiß der Lauffläche des Plunger-Differentialkolbens sowie der Dichtungen. Durch die Anwendung des Plungerkolbenprinzips erübrigt sich eine Feinbearbeitung der Zylinderbohrungen im Abstützbock, die wesentlich aufwendiger durchzuführen ist, als die Feinbearbeitung der zylindrischen Innen- und Außenfläche des Plunger-Differentialkolbens. Im weiteren vereinfacht sich durch die Anwendung des Plungerkolbenprinzips die Dichtungsmontage.

In einer bevorzugten Ausführungsform besteht die Abstützung aus mehreren Abstützsäulen, die im Parallelabstand zur Hauptachse der Spritzgießmaschine bzw. in kreisförmiger Anordnung an der beweglichen Formaufspannplatte befestigt sind. Damit ergibt sich eine günstigere Abstützung der beweglichen Formaufspannplatte, da die Stützkräfte nicht mehr zentral an einer Stelle sondern über eine größere Fläche verteilt in die bewegliche Formaufspannplatte eingeleitet werden.

Aufgrund der kreisförmigen Anordnung der Abstützsäulen ist die bewegliche Formaufspannplatte im zentralen bzw. mittleren Bereich frei von Abstützelementen, wodurch günstige Raumverhältnisse für die Anordnung eines Auswerfersystems gegeben sind.

In einer weiteren bevorzugten Ausführungsform sind auf der Schloßplatte auf einem Kreis um einem zentral befestigten Plunger-Differentialkolben weitere, vorzugsweise vier Plungerkolben angeordnet, die in im Abstützbock ausbebildete Plungerzylinder eintauchen. Diese Plungerkolben enthalten keinen Differentialkolben und dienen lediglich zur Schließkrafterzeugung. Durch die Aufteilung der Schließfunktion auf mehrere Plungerkolben kann der Kolbendurchmesser des zentrisch angeordneten Plunger-Differentialkolbens noch geringer ausgeführt werden, wodurch sich eine kompaktere Bauweise erlaubt, da weitere Bauteile in einem engeren radialen Abstand zum Plunger-Differentialzylinder angeordnet werden können.

Zur Erzielung einer kompakten Bauweise können die Plungerkolben auf der Schloßplatte auch fluchtend zu den Abstützsäulen angeordnet sein und im Inneren Hohlräume aufweisen, in die die Abstützsäulen in der Öffnungsphase nach dem Entriegeln in den Öffnungen der Schloßplatte einfahren können.

Vorzugsweise haben die Plungerkolben und der Plunger-Differentialkolben den gleichen Durchmesser, so daß sich eine Vielzahl kleinerer, baugleicher Bauteile ergibt.

Eine Ausnahme stellt lediglich der Plunger-Differentialkolben dar, der aber vorzugsweise ebenfalls den gleichen Außendurchmesser aufweist, so daß für alle Plungerkolben und Plunger-Differentialkolben die gleichen Zylinderbohrungen im Abstützbock zu fertigen sind. Im weiteren ergibt sich dadurch der Vorteil, daß mit Ausnahme der Dichtungen des Differentialkolbens, alle Dichtungen gleich sind. Wegen der geringeren Durchmesser ist somit bei den Dichtungen auch eine bessere Funktionstüchtigkeit gegeben.

Durch die Anordnung des Plunger-Differentialkolbens liegen für die Losreißphase im öffnungsseitigen Differentialzylinderraum große Ringkolbenflächen vor, womit hohe Losreißkräfte ermöglicht werden.

Die Erfindung wird nachfolgend anhand von Ausführungsbeispielen näher erläutert.

Es zeigen:

Fig. 1     die Formschließvorrichtung einer Spritzgießmaschine in einer Ansicht gemäß der Schnittlinie I-I in FIG. 2;

Fig. 2     die Formschließvorrichtung in der Ansicht gemäß der Schnittlinie II-II in Fig. 1;

Fig. 3     eine andere Ausführungsform der Formschließvorrichtung einer Spritzgießmaschine in einer Ansicht gemäß der Schnittlinie III-III in Fig. 4 und

Fig. 4     die Formschließvorrichtung in der Ansicht gemäß der Schnittlinie IV-IV in Fig. 3.

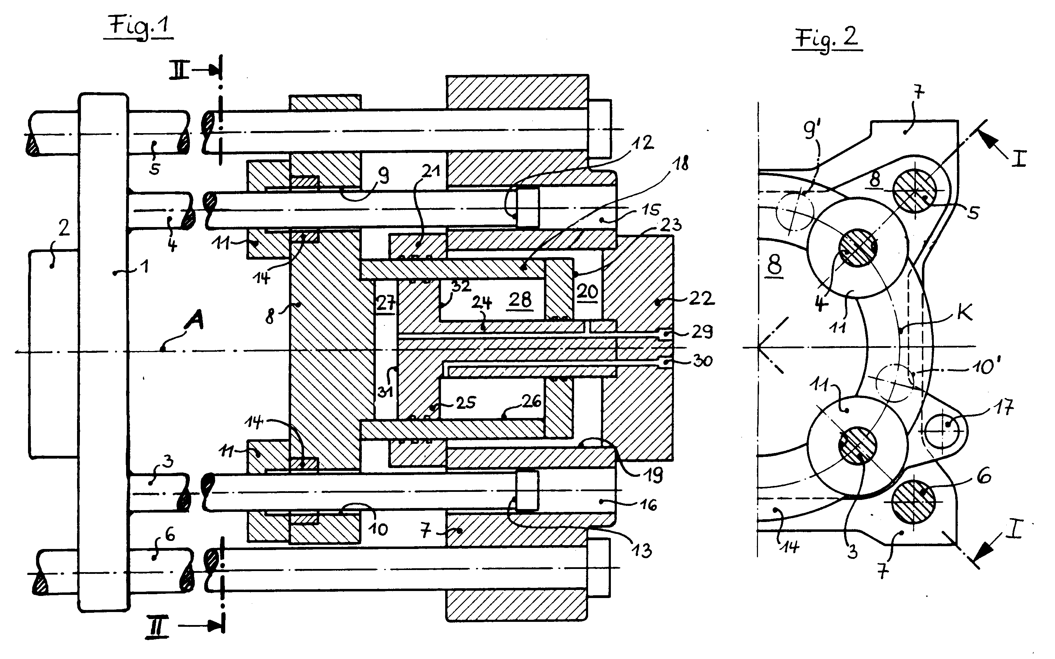

Die Fig. 1 und 2 zeigen den die Formschließvorrichtung enthaltenden Teil einer Spritzgießmaschine mit einer beweglichen Formaufspannplatte 1 und einer daran aufgespannten Formhälfte 2 sowie daran befestigten Abstützsäulen 3 und 4. Die Formaufspannplatte 1 ist in Führungssäulen 5 und 6 verschiebbar gelagert, die in einem Abstützbock 7 fest verankert sind. Auf den Führungssäulen ist ferner eine aus einer Schloßplatte 8 bestehende Verriegelungseinheit verschiebbar gelagert. Die Schloßplatte 8 weist Öffnungen 9 und 10 auf, die von den Abstützsäulen 3 und 4 durchsetzt sind. An den Öffnungen 9 und 10 sich Schloß-Hülsenelemente 11 angesetzt, in denen die mit Anschlagrändern 12 und 13 versehenen Enden der Abstützsäulen 3 und 4 mittels einer Verriegelungsscheibe 14 verriegelt werden können. Fluchtend zu den Abstützsäulen 3 und 4 sind im Abstützbock 7 Durchgangsbohrungen 15 und 16 ausgebildet, die in der Öffnungsphase einen freien Durchtritt für die Abstützsäulen ermöglichen. Die bewegliche Formaufspannplatte 1 ist mittels an der Schloßplatte 8 abgestützten Eilganghydraulikzylindern 17 in Öffnungs- und Schließstellung verschiebbar.

Zentrisch und koaxial zur Hauptachse A der Spritzgießmaschine ist auf der Schloßplatte 8 ein Plunger-Differentialkolben 18 befestigt, der in einem im Abstützbock 7 ausgebildeten Plunder-Differentialzylinder 19 geführt ist. Der vom Plunger-Differentialzylinder umschlossene Hauptzylinderraum 20 ist auf der einen Seite mittels eines am Abstützbock 7 befestigten Führungsringes 21 und einer darin enthaltenen Dichtung und auf der anderen Seite mittels eines am Abstützbock befestigten Deckels 22 abgeschlossen. Die der Schloßplatte 8 abgewandte Plunger-Differentialkolbenfläche 23 ist von der Kolbenstange 24 eines fest mit dem Abstützbock 7 verbundenen Differentialkolbens 25 durchsetzt, der in einem im Plunger-Differentialkolben 18 ausgebildeten Differentialzylinder 26 geführt ist. Der Differentialkolben 25 unterteilt den vom Differentialzylinder 26 umschlossenen Zylinderraum in einen öffnungsseitigen Differentialzylinderraum 27 und in einem schließseitigen Differentialzylinderraum 28. Über eine Schließdruckleitung 29 sind der Hauptzylinderraum 20 und der schließseitige Differentialzylinderraum 27 in der Schließphase mit Druckflüssigkeit beaufschlagbar und in der Losreiß- und Öffnungsphase drucklos schaltbar. Der Öffnungsseitige Differentialzylinderraum 28 ist über eine Losreiß-Druckleitung 30 in der Losreiß- und Öffnungsphase mit Druckflüssigkeit beaufschlagbar und in der Schließphase drucklos schaltbar.

In der Schließphase kommen die Plunger-Differentialkolbenfläche 23 und die Differentialkolbenfläche 31 und in der Losreiß- und Öffnungsphase die Differentialkolben-Gegenfläche 32 zur Wirkung.

Aufgrund der Tatsache, daß in der Schließphase eine vergrößerte Kolbenfläche (23 und 31) zur Wirkung kommt, dann der Durchmesser des Plunger-Differentialkolbens 18 so gering gehalten werden, daß sich zwischen dem Plunger-Differentialkolben 18 und den Führungssäulen 5 und 6 noch weitere Funktionselemente, wie die Abstützsäulen 3 und 4 anordnen lassen. Die im Parallelabstand zur Hauptachse A und auf dem Kreis K auf der beweglichen Formaufspannplatte 1 befestigten Abstützsäulen 3 und 4 bieten den Vorteil einer breiter verteilten Abstützung sowie eines freien Raumes im zentralen Bereich der beweglichen Formaufspannplatte 1, wodurch günstige Verhältnisse für die Anordnung eines Auswerfersystems gegeben sind.

Für den Schließvorgang wird die bewegliche Formaufspannplatte 1 mittels der Eilganghydraulikzylinder 17 in die geschlossene Position gebracht und über die Verriegelungsscheibe 14 werden Öffnungen 9 und 10 in der Schloßplatte 8 verschlossen, so daß die Enden der Abstützsäulen 3 und 4 in den Schloß-Hülsenelementen 11 verriegelt sind. Die Verriegelungsstellung der Verschlußscheibe 14 ist in Fig. 2 mit den strichpunktierten Kreisen 9′ und 10′ angedeutet. Die Schließdruckleitung 29 wird mit Druck beaufschlagt, worauf sich über die Plunger-Differentialkolbenfläche 23 und die Differentialkolbenfläche 31 die gewünschte Schließkraft aufbaut und über die Abstützsäulen 3 und 4 auf die bewegliche Formaufspannplatte 1 überträgt. Der öffnungsseitige Differentialzylinderraum 28 ist hierbei drucklos geschaltet, indem die Losreiß-Druckleitung 30 zum Tank entlastet wird.

Zum Losreißen wird die Differentialkolben-Gegenfläche 32 über die Losreiß-Druckleitung 30 mit Druck beaufschlagt und die Plunger-Differentialkolbenfläche 23 und Differentialkolbenfläche 31 werden zum Tank geschaltet. Die Losreißkraft wird mittels der an den Enden der Abstützsäulen 3 und 4 ausgebildeten Anschlagrändern 12 und 13 von der Schloßplatte 8 auf die bewegliche Formaufspannplatte 1 übertragen, die in den Schloßhülsen 11 zum Anschlag kommen.

Zum Öffnen der Formschließvorrichtung gibt die Verriegelungsscheibe 14 die Öffnungen 9 und 10 in der Schloßplatte 8 frei, worauf die bewegliche Formaufspannplatte 1 mittels der Eilganghydraulikzylinder 17 in die geöffnete Position gebracht wird, in der die Abstützsäulen 3 und 4, wie in Fig. 1 dargestellt, in die Durchgangsbohrungen 15 und 16 im Abstützbock 7 eintauchen.

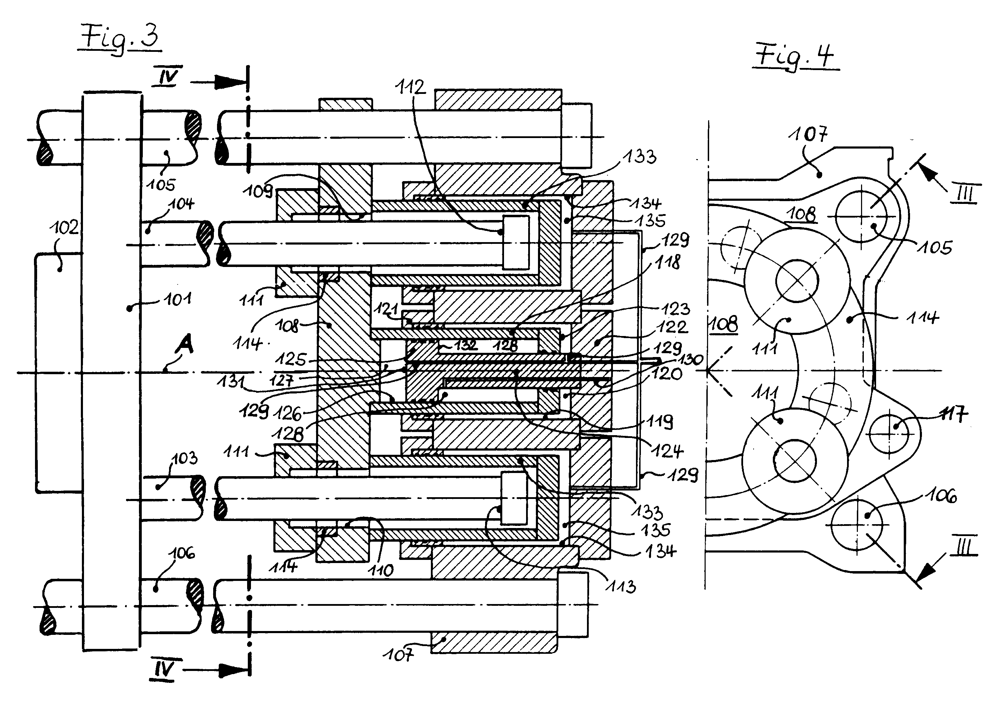

Die in den Fig. 3 und 4 dargestellte Formschließvorrichtung entspricht in den Teilen 101 bis 114 und 117 den Teilen 1 bis 7 und 17 der Ausführungsform nach den Fig. 1 und 2. Des weiteren entspricht im Prinzip ein zentral auf der Schloßplatte 108 angeordneter Plunger-Differentialkolben 118 mit dem Plunger-Differentialzylinder 119, dem Hauptzylinder 120, dem Führungsring 121, dem Deckel 122, der Plunger-Differentialkolbenfläche 123, der Kolbenstange 124, dem Differentialkolben 125, dem Differentialzylinder 126, dem schließseitigen Differentialzylinderraum 127, dem öffnungsseitigen Differentialzylinderraum 128, der Schließdruckleitung 129, der Losreiß-Druckleitung 130, der Differentialkolbenfläche 131 und der Differentialkolben-Gegenfläche 132 im Aufbau und in der Funktion den Teilen 18 bis 32 der Ausführungsform nach den Fig. 1 und 2.

Im Vergleich zu der Ausführungsform nach den Fig. 1 und 2 ist der Durchmesser des Plunger-Differentialkolbens 118 jedoch geringer, da die Funktion der Schließkrafterzeugung von weiteren, auf der Schloßplatte 108 angeordneten einfach wirkenden Plungerkolben 133 übernommen wird, die in im Abstützbock 107 ausgebildete Plungerzylinder 134 eintauchen. Die von den im Parallelabstand zum Plunger-Differentialzylinder 119 angeordneten Plungerzylindern 134 umschlossenen Nebenzylinderräume 135 sind mit dem Hauptzylinder 120 und dem schließseitigen Differentialzylinderraum 127 mit der Schließdruckleitung 129 parallel geschaltet. Die Plungerkolben 133 sind fluchtend zu den Abstützsäulen 103 und 104 angeordnet und haben Hohlräume 136 ausgebildet, in die die Abstützsäulen 103 und 104 in der Schließphase einfahren.

Da die Funktion der Schließkrafterzeugung auf die vier Plungerkolben 133 und den Plunger-Differentialkolben 118 verteilt ist, reichen hierfür Kolben mit geringem Kolbendurchmesser aus, die wesentlich billiger und mit höherer Präzision und Oberflächengüte herstellbar sind. Damit verbessert sich auch die Funktionstüchtigkeit der Dichtungen. Vorzugsweise sind die Plungerkolben und der Plunger-Differentialkolben mit gleichem Durchmesser versehen, wodurch sich inclusive der Dichtungen viele baugleiche Teile ergeben.

**Patentansprüche**

1. Formschließvorrichtung für eine Spritzgießmaschine mit einer festen Formaufspannplatte, die über Führungssäulen mit einem Abstützbock fest verbunden ist, mit einer auf den Führungssäulen gelagerten beweglichen Formaufspannplatte, mit einer an der beweglichen Formaufspannplatte befestigten mechanischen Abstützung, mit einer auf den Führungssäulen verschiebbar gelagerten Verriegelungseinheit, die mit der Abstützung in der Schließstellung der beweglichen Formaufspannplatte verriegelbar ist und die mit der beweglichen Formaufspannplatte über Eilganghydraulikzylinder und mit dem Abstützbock über einen doppelt wirkenden Schließkolben verbunden ist, der in einem im Abstützbock enthaltenen Schließzylinder geführt ist, **dadurch gekennzeichnet,** daß mindestens ein Schließkolben angeordnet ist, der aus einem in einem Plunger-Differentialzylinder (19, 119) geführten, doppelt wirkenden Plunger-Differentialkolben (18, 118) besteht, dessen der Verriegelungseinheit abgewandten Plunger-Differentialkolbenfläche (23, 123) von der Kolbenstange (24, 124) eines fest mit dem Abstützbock (7, 107) verbundenen Differentialkolbens (25, 125) durchsetzt ist, der in einem im Plunger-Differentialkolben (18,118) ausgebildeten Differentialzylinder (26,126) geführt ist, wobei der Differentialkolben (25,125) den vom Differentialzylinder (26,126) umschlossenen Raum in einen schließseitigen Differentialzylinderraum (27,127) und in einen öffnungsseitigen Differentialzylinderraum (28,128) unterteilt und wobei zum Schliessen der Formschließvorrichtung der vom Plunger-Differentialzylinder (19,119) umschlossene Hauptzylinderraum (20,120) und der schließseitige Differentialzylinderraum (27,127) mit Druckflüssigkeit beaufschlagbar und der öffnungsseitige Differentialzylinderraum (28,128) drucklos schaltbar ist und zum Losreißen der geschlossenen Formschließvorrichtung der öffnungsseitige Differentialzylinderraum (28,128) mit Druckflüssigkeit beaufschlagbar und der schließseitige Differentialzylinderraum (27,127) und der Hauptzylinderraum (20,120) drucklos schaltbar ist.

2. Formschließvorrichtung nach Anspruch 1, **dadurch gekennzeichnet,** daß ein Plunger-Differentialzylinder (19,119) mit dem Plunger Differentialkolben (18,118) und dem Differentialkolben (25,125) koaxial zu der mit der Spritzachse zusammenfallenden Hauptachse A der Spritzgießmaschine im Abstützbock (7,107) angeordnet ist.

3. Formschließvorrichtung nach Anspruch 2, **dadurch gekennzeichnet**, daß die Verriegelungseinrichtung aus einer zur beweglichen Formaufspannplatte(1,101) parallel angeordneten Schloßplatte (8,108) besteht, daß die mechanische Abstützung aus vorzugsweise im gleichen Parallelabstand zur Hauptachse A angeordneten Abstützsäulen (3,4;103,104) besteht, die in der Schließphase in in der Schloßplatte (8,108) ausgebildeten Öffnungen (9,10;109,110) mittels einer Verriegelungsscheibe (14,114) verriegelbar sind und die in der Öffnungsphase durch die Öffnungen (9,10;109,110) durchtreten.

4. Formschließvorrichtung nach Anspruch 3, **dadurch gekennzeichnet**, daß auf der Schloßplatte (108) neben dem zentral befestigten Plunger-Differentialkolben (118) weitere, vorzugsweise vier Plungerkolben (133) im gleichen Parallelabstand zum Plunger-Differentialkolben (118) angeordnet sind, die in im Abstützbock (107) ausgebildete Plungerzylinder (134) eintauchen, wobei die von den Plungerzylindern (134) umschlossenen Nebenzylinderräume (135) synchron mit dem Hauptzylinderraum (120) des Plunger-Differentialzylinders (119) mit Druckflüssigkeit beaufschlagbar und drucklos schaltbar sind.

5. Formschließvorrichtung nach Anspruch 4, **dadurch gekennzeichnet**, daß die Plungerkolben (134) fluchtend zu den Achsen der Abstützsäulen (103,104) auf der Schloßplatte (108) angeordnet sind und im Inneren Hohlräume (136) aufweisen, die in der Öffnungsstellung der Formschließvorrichtung von den Abstützsäulen (103,104) ausgefüllt sind.

6. Formschließvorrichtung nach einem der Ansprüche 4 oder 5, **dadurch gekennzeichnet**, daß die Plungerkolben (134) und der Plunger-Differentialkolben (118) gleiche Durchmesser aufweisen.

## Claims

1. Mould-closing device for an injection moulding machine with a solid mould-clamping plate, which is securely connected by way of guide columns to a support block, with a movable mould clamping plate mounted on the guide columns, with a mechanical support attached to the movable mould clamping plate, with a locking unit mounted to slide on the guide columns, which locking unit can be locked to the support in the closed position of the movable mould clamping plate and which is connected to the movable mould clamping plate by way of rapid traverse hydraulic cylinders and to the support block by way of a double-acting closing piston, which is guided in a closing cylinder contained in the support block, characterised in that at least one closing piston is provided, which consists of a double-acting plunger differential piston (18, 118) guided in a plunger differential cylinder (19, 119), whereof the plunger differential piston surface (23, 123) remote from the locking unit is penetrated by the piston rod (24, 124) of a differential piston (25, 125) securely connected to the support block (7, 107), which differential piston is guided in a differential cylinder (26, 126) constructed in the plunger differential piston (18; 118), the differential piston (25, 125) dividing the space enclosed by the differential cylinder (26, 126) into a differential cylinder chamber (27, 127) on the closing side and a differential cylinder chamber (28, 128) on the opening side and for closing the mould-closing device, the main cylinder chamber (20, 120) enclosed by the plunger differential cylinder (19, 119) and the differential cylinder chamber (27, 127) on the closing side being able to be supplied with pressure fluid and the differential cylinder chamber (28, 128) on the opening side being able to be controlled without pressure and for pulling off the closed mould-closing device, the differential cylinder chamber (28, 128) on the opening side being able to be supplied with pressure fluid and the differential cylinder chamber (27, 127) on the closing side and the main cylinder chamber (20, 120) being able to be controlled without pressure.

2. Mould-closing device according to Claim 1, characterised in that a plunger differential cylinder (19, 119) with the plunger differential piston (18, 118) and the differential piston (25, 125) is arranged coaxially to the main axis A of the injection moulding machine coinciding with the injection axis, in the support block (7, 107).

3. Mould-closing device according to Claim 2, characterised in that the locking device consists of a lock plate (8, 108) arranged parallel to the movable mould clamping plate (1, 101), that the mechanical support consists of support columns (3, 4; 103, 104) preferably arranged with the same parallel spacing from the main axis A, which support columns can be locked in the closing phase by means of a locking disc (14, 114) in openings (9, 10; 109, 110) formed in the lock plate (8, 108) and which in the opening phase pass through the openings (9, 10; 109, 110).

4. Mould-closing device according to Claim 3, characterised in that disposed on the lock plate (108), beside the centrally attached plunger differential piston (118), are further, preferably four plunger pistons (133) with the same parallel spacing from the plunger differential piston (118), which plunge into plunger cylinders (134) formed in the support block (107), the secondary cylinder chambers (135) enclosed by the plunger cylinders (134) being supplied with pressure fluid in synchronism with the main cylinder chamber (120) of the plunger differential cylinder (119) and being able to be controlled without pressure.

5. Mould-closing device according to Claim 4, characterised in that the plunger pistons (134) are arranged in alignment with the axes of the support columns (103, 104) on the lock plate (108) and internally comprise cavities (136), which in the opening position of the mould-closing device are filled by the support columns (103, 104).

6. Mould-closing device according to one of Claims 4 or 5, characterised in that the plunger pistons (134) and the plunger differential piston (118) have the same diameter.

**Revendications**

1. Dispositif de fermeture de moule, pour une machine à mouler par injection comportant un plateau fixe de fixation de moule, qui est relié de façon fixe, par l'intermédiaire de colonnes de guidage, à un support d'appui; un plateau mobile de fixation de moule, monté sur les colonnes de guidage; un dispositif d'appui mécanique, fixé sur le plateau mobile de fixation de moule; une unité de verrouillage, montée de façon à pouvoir coulisser sur les colonnes de guidage, cette unité pouvant être verrouillée avec le dispositif d'appui lorsque le plateau mobile de fixation de moule est en position de fermeture, et étant reliée au plateau mobile de fixation de moule par l'intermédiaire d'un vérin hydraulique rapide et au support d'appui par l'intermédiaire d'un piston de fermeture à double effet qui est guidé dans un cylindre de vérin de fermeture contenu dans le support d'appui, dispositif caractérisé en ce qu'il comporte au moins un piston de fermeture qui est constitué par un piston plongeur différentiel (18, 118) à double effet, guidé dans un cylindre (19, 11, 9) pour plongeur différentiel, la surface (23, 123) de piston plongeur différentiel située à l'opposé de l'unité de verrouillage étant traversée par la tige (24, 124) d'un piston différentiel (25, 125) relié au support d'appui (7, 107) et qui est guidé dans un cylindre différentiel (26, 126) formé dans le piston plongeur différentiel (18, 118), le piston différentiel (25, 125) subdivisant l'espace entouré par le cylindre différentiel (26, 126) en un espace (27, 127) de cylindre différentiel situé du côté de fermeture et en un espace (28, 128) de cylindre différentiel du côté de l'entrée et dans lequel, en vue de fermer le dispositif de fermeture de moule, l'espace (20, 120) du cylindre principal entouré par le cylindre (19, 119) de plongeur différentiel, et l'espace (27, 127) de cylindre différentiel situé du côté de fermeture peuvent être placés sous l'effet d'un fluide hydraulique sous pression et l'espace (28, 128) du cylindre différentiel situé du côté d'ouverture peut être placé en situation d'absence de pression et dans lequel, en vue de décrocher le dispositif de fermeture de moule fermé, l'espace (28, 128) du cylindre différentiel, situé du côté de l'ouverture, peut être placé sous l'effet d'un fluide hydraulique, et l'espace (27, 127) de cylindre différentiel situé du côté de fermeture ainsi que l'espace (20, 120) du cylindre principal pouvant être mis en situation d'absence de pression.

2. Dispositif de fermeture de moule selon la revendication 1, caractérisé en ce qu'un cylindre différentiel (19, 119) pour plongeur, comportant le piston différentiel plongeur (18, 118) et le piston différentiel (25, 125), est disposé dans le support d'appui (7, 107) coaxialement à l'axe principal A de la machine à mouler par injection, coïncidant avec l'axe d'injection.

3. Dispositif de fermeture de moule selon la revendication 2, caractérisé en ce que le dispositif de verrouillage est constitué par un plateau (8, 108) de verrouillage, disposé parallèlement au plateau (1, 101) mobile pour fixation de moules ; en ce que le soutien mécanique est constitué par des colonnes (3, 4 ; 103, 104) de soutien qui sont disposées de préférence à la même distance en parallèle par rapport à l'axe principal A, et qui, au cours de la phase de fermeture, peuvent être verrouillés, au moyen d'une bague (14, 114) de verrouillage dans des ouvertures (9, 10 ; 109, 110) formées dans le plateau ( 8, 108) de verrouillage et qui passent dans les ouvertures (9, 10 ; 109, 110) au cours de la phase d'ouverture.

4. Dispositif de fermeture de moule selon la revendication 3, caractérisé en ce que, sur le plateau (108) de verrouillage sont disposés, en plus du piston différentiel plongeur (118) fixé de façon centrale, d'autres pistons plongeurs (133), de préférence quatre pistons disposés parallèlement à la même distance par rapport au piston différentiel plongeur (118), lesquels pénètrent dans des cylindres (134) pour plongeurs ménagés dans le bloc d'appui (107), les espaces intérieurs (135) des cylindres secondaires entourés par les cylindres (134) pour plongeurs pouvant, en synchronisme avec l'espace intérieur (120) du cylindre principal (119) différentiel pour plongeur, être placés sous l'effet d'un fluide hydraulique et être commutés à un état exempt de pression.

5. Dispositif de fermeture de moule selon la revendication 4, caractérisé en ce que les pistons plongeurs (134) sont disposés sur le plateau (108) de verrouillage en alignement avec les axes des colonnes (103, 104) de soutien et présentent, à l'intérieur, des espaces creux (136) qui sont remplis par les colonnes (103, 104) de soutien lorsque le dispositif de fermeture de moule est en position d'ouverture.

6. Dispositif de fermeture de moule selon une des revendications 4 ou 5, caractérisé en ce que les pistons plongeurs (134) et le piston différentiel plongeur (118) ont le même diamètre.

Fig. 2

Fig.1

EP 0 265 750 B1

Fig. 3

Fig. 4